# EUROPEAN PATENT APPLICATION

(11) **EP 3 805 647 A1**
(43) Date of publication of application: **14.04.2021**
(21) Application number: 19815591.3
(22) Date of filing: 23.05.2019
(51) Int. Cl.: F24C 15/20, A23N 12/08, A61L 9/14

(54) **COOKING SMOKE VENTING APPARATUS**

(30) Priority: 07.06.2018 KR 20180065209; 26.03.2019 KR 20190033974
(71) Applicant: Lee, Younghee, Jeonju-si, Jeollabuk-do 54898 (KR)
(72) Inventor: Lee, Younghee, Jeonju-si, Jeollabuk-do 54898 (KR)
(74) Representative: Cabinet Chaillot
(86) International application number: PCT/KR2019/006153
(87) International publication number: WO 2019/235763

(57) **Abstract**

A discharge device connected to an exhaust tube for discharging out fumes of a cooking chamber comprises a water reservoir, a cooling container, and a gasket. A water reservoir is provided with a water supply plug on an upper side of a body in which a space is formed to receive water. A cooling container has a body with an open upper part through which accommodates the water reservoir and a space to receive water in the lower part. An inlet pipe is formed at one side of the cooling container, and it is connected to the exhaust tube through which the fumes flows. A gasket is formed at an upper opening of the sidewalls of the cooling container for sealing a gap with the water reservoir. A number of partition walls are installed in vertical direction at the bottom of the cooling container. The fumes entering the inlet pipe are reduced in multiple stages, firstly cooled by the water reservoir while moving through a multitude of gaps and adhering to the surface, and secondly cooled and precipitated by the water in the cooling container.

## Description

### BACKGROUND

### 1. Field of the invention

The present invention relates to discharge devices installed in a cooking appliance for efficiently reducing odor and smoke generated when food is heated. Specifically, it relates to discharge devices that cool and reduce fumes of the cooking chamber generated from food.

### 2. Description of the related art

When an object, such as food, is heated in a cooking apparatus equipped with a cooking chamber, various organic substances are generated together with steam. As heating proceeds, anaerobic conditions are formed in the cooking chamber, resulting in severe smoke and odor.

Conventional cooking appliances do not have a function of removing fumes generated during cooking. The fumes generated from food are not only harmful to the human body, but also cause environmental pollution and discomfort. To solve this problem, a range hood is currently installed in the kitchen. However, since the range hood is located far from the place where the actual cooking is performed, it cannot prevent the spread of fumes to the kitchen and living room.

An oven is a cooking appliance that puts food in a cooking chamber equipped with a heater. The oven heats the surface and the inside of food at the same time, so that bulky foods can be cooked efficiently. However, the conventional oven does not have a function of purifying fumes generated while food is being cooked. Some ovens have a cleaning function that causes thermal decomposition by heating the cooking chamber to about 400°C to remove contaminants accumulated on the walls of the cooking chamber. However, in this case, since the cooking chamber is mainly heated without food, it is not possible to solve the problem of spreading the fumes to the room while food is being cooked.

A method of reducing fumes by installing an oxidation catalyst in the cooking chamber is also known. The fumes must be passed through an oxidation catalyst heated to 300°C - 500°C in order to effectively reduce them. Therefore, such an oven mainly includes a heater for heating food and a heater for heating an oxidation catalyst, respectively, so that electric energy consumption is large. In addition, the oxidation catalyst itself is expensive and needs to be replaced when it loses its activity.

Another technique for removing cooking fumes has been developed by the present applicant. According to international application WO 2013/187561 A1 and European application publication EP2,860,461 A1, an oven in which a pyrolysis device is attached to a cooking chamber is disclosed. The pyrolysis device includes a heating means installed inside the cooking chamber, a hollow combustion tube surrounding the heating means, a combustion space formed between the heating means and the combustion tube through which gas can flow, a fan that creates a flow of air, and a connector connecting the middle part of the combustion tube and the fan.

In an oven equipped with a pyrolysis device, fumes do not diffuse out of the cooking chamber and is pyrolyzed in a combustion space heated to 700°C or more by a heating means. The heating means also heats the food by providing radiant heat to the cooking chamber in addition to the action of pyrolyzing the fumes.

An oven equipped with a pyrolysis device is effective in pyrolyzing fumes generated while food is being heated, but it cannot purify the fumes any more after heating is terminated. In order to cool the cooked food, the pyrolysis unit must be stopped. However, when the operation of the pyrolysis device is stopped, since pyrolysis no longer occurs, the fumes continue to occur and spread out of the oven until the food is completely cooled.

The present invention provides a water-cooling discharge device for fumes generated while food is heated. This discharge device can reduce fumes during and after heating the food.

The following prior art is relevant to the current patent application: Korean Pat. Nos. 10-1649682; 10-0329500; 10-1592245; 20-0478046; and U.S. Pat. Nos. 8,490,613 B2; 8,101,894; and Japanese Pat. Nos. 1991-055438; 2010-112593; 2002-263006.

### SUMMARY OF THE INVENTION

Conventional cooking appliances do not reduce fumes generated in the cooking chamber, and the fumes diffuse into the room to reduce comfort. Therefore, there is a need to improve this.

The present invention is devised to solve this problem and provides discharge devices capable of cooling and reducing fumes by using water.

A discharge device connected to an exhaust tube for discharging fumes in a cooking chamber to the outside comprises a water reservoir, a cooling container, and a gasket.

A water reservoir is provided with a water supply plug on an upper side of a tall rectangular shaped body in which a space is formed to receive water.

A cooling container has a tall rectangular shaped body with an open upper part through which accommodates the water reservoir and a space to receive water in the lower part thereof. An inlet pipe is formed at one side of the rectangular body and connected to the exhaust tube through which the fumes flow.

A first partition wall, a second partition wall, and a third partition wall are installed in vertical direction at the bottom of the cooling container. A pair of a first sidewall, a pair of second sidewall, and a pair of third sidewall are formed at the two sides facing each other starting from the partition walls to seal a gap with the water reservoir.

A gasket is formed starting at an edge of the opening on the third sidewall of the cooling container, turning around the wall where the inlet pipe is formed, and extending to an edge of the other third sidewall on the opposite side;

A first gap is formed between the first partition wall and the bottom side of the water reservoir, and a second partition wall is in close contact with the bottom side of the water reservoir. The height of the second sidewall is shorter than the other two side walls, therefore a second gap is formed in the upper end of the second sidewall. A third gap is formed between the third partition wall and the bottom side of the water reservoir.

The fumes entering into the inlet pipe are reduced in two different stages, firstly cooled by the water reservoir while moving through a number of gaps and adhering to the surface, and secondly cooled and precipitated by the water in the cooling container.

The cooling container is detachably connected to the exhaust tube.

The water reservoir is detachably accommodated in the cooling container.

The inlet pipe is installed at a position higher than the water level in the cooling container.

A discharge device according to another embodiment comprises a water reservoir, a cooling container, and a gasket, wherein the discharge unit is attached to the exhaust tube of a cooking chamber.

A water reservoir is provided with a water supply plug on the upper side of a rectangular shaped body in which a space is formed to receive water.

A cooling container has a rectangular shaped body with an open upper side which is connected to the water reservoir and a space to receive water at the bottom side. An inlet pipe is formed at one side of the rectangular body and connected to the exhaust tube through which the fumes flow.

A first partition wall and a second partition wall are installed in vertical direction at the bottom of the cooling container.

A gasket is installed on the upper edge of the sides to which the first partition wall, the second partition wall and the inlet pipe are formed.

A first gap is formed between the first partition wall and the bottom side of the water reservoir, and a second gap is formed between the second partition wall and the the bottom side of the water reservoir.

The fumes introduced into the inlet pipe are reduced in two different stages, firstly cooled by the water reservoir while moving through a number of gaps and adhering to the surface, and secondly cooled and precipitated by the water in the cooling container.

The cooling container is detachably connected to the exhaust tube.

The water reservoir is detachably connected to the cooling container.

The inlet pipe is installed at a position higher than the water level in the cooling container.

A discharge device according to another embodiment comprises a water reservoir, a cooling container, and an inlet pipe, wherein the discharge unit is attached to an exhaust tube of a cooking chamber.

A water reservoir is provided with a water supply plug on the upper side of a rectangular shaped body in which a space is formed to receive water.

A cooling container is a rectangular shaped container, and a tube is formed at the upper end of one side. An exhaust pipe is formed in vertical direction at the upper end of the other side. The tube cosists of a plurality of straight portions installed in parallel in the horizontal direction and U-shaped bending portions alternately arranged at both ends of the straight portion, but the entire tube is connected by one line and has an elliptical cross-section through which gas can circulate. The cooling container is located inside the water reservoir.

An inlet pipe is connected to the upper straight end portion of the tube and passes through the upper side of the water reservoir. The inlet pipe is connected to the exhaust tube to introduce fumes into the tube.

The exhaust pipe has a structure penetrating the upper portion of the water reservoir to discharge gas exiting the cooling container. The fumes entering into the inlet pipe are reduced in two different stages, firstly by adhering to the surface of the tube and the exhaust pipe which are kept cool in the water reservoir, and secondly cooled and precipitated on the water in the cooling container.

The inlet pipe is detachably connected to the exhaust tube.

Water in the cooling container can be filled or removed through the exhaust pipe.

The cooling container, the tube, and the exhaust pipe have a sealed structure so that water in the water reservoir does not leak.

According to another embodiment, a discharge device is connected to a cooking chamber where an exhaust hole is formed at the bottom center thereof, and all places except the exhaust hole are sealed so that the fumes are exhausted only through the exhaust hole. The discharge device comprises an outer container, an inner container, and a cover.

An outer container is bowl-shaped and located under the cooking chamber. The outer container has an open upper rim to receive water;

An inner container has a shape resembling the outer container. The inner container is smaller in size than the outer container and located inside the outer container.

A cover is a flat plate covering the upper opening of the outer container and the inner container. The cover is provided with an inlet pipe which protrudes upward from a hole formed in the center of the flat plate,

The exhaust hole and the inlet pipe are connected to each other so that the fumes in the cooking chamber flow into the inner container. A first space is formed between the inner container and the cover and a second space is formed between the outer container and the cover. The fumes are reduced in a two-stage cooling structure, firstly cooled while passing through the first space, and secondly cooled while passing through the second space.

The inlet pipe is detachably connected to the exhaust hole.

The outer container and the inner container are detachably connected to the cover.

The fumes flowing into the first space through the inlet pipe are cooled, and any uncooled fumes move to the second space through the gap between the upper rim of the inner container and the cover.

According to the cooking appliance having the discharge devices of the present invention, the fumes sufficiently are reduced while passing through the discharge devices having a plurality of cooling stages, so that the indoor environment can be comfortably maintained.

The discharge devices use easily available water to cool the fumes, so it is safe and needs no electricity.

### BRIEF DESCRIPTION OF THE DRAWINGS

Fig. **1** is a vertical cross-sectional view of a cooking appliance according to the first embodiment.
Fig. **2** is an exploded and assembled perspective view of the discharge device **30** according to the first embodiment.
Fig. **3a** is a side cross-sectional view of the discharge device **30.**
Fig. **3b** is a cross-sectional view taken along **3b-3b** of Fig. **3a**.
Fig. **4** is a side cross-sectional view of a cooking appliance according to the second embodiment.
Fig. **5** is an exploded perspective view of a discharge device **30'** according to the second embodiment.
Fig. **6** is a side cross-sectional view of the discharge device **30'.**
Fig. **7** is a vertical cross-sectional view of a cooking appliance according to the third embodiment.
Fig. **8** is a side cross-sectional view of a discharge device **30"** according to the third embodiment.
Fig. **9** is a cross-sectional view taken along **9-9** of Fig. **8****.**
Fig. **10** is an exploded perspective view of a cooking appliance and a discharging device **30**^{#} according to the fourth embodiment.
Fig. **11** is a side cross-sectional view of a cooking appliance and the discharging device **30**^{#} according to the fourth embodiment.

### DETAILED DESCRIPTION OF THE INVENTION

In addition to the above objects, other features of the present invention will be described with reference to the first embodiment.

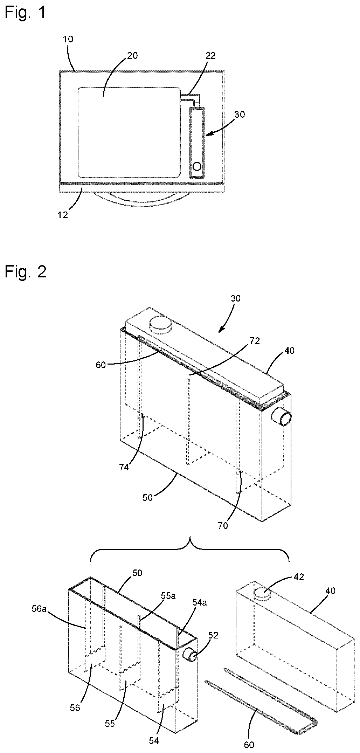

Referring to Fig. **1****,** a cooking chamber **20** for receiving an object is formed inside a body **10,** and a door **12** is installed in front of the body **10** to open and close the opening of the cooking chamber **20.** An exhaust tube **22** for discharging out fumes is connected to the side of the cooking chamber **20.** The exhaust tube **22** is the only passage through which the fumes in the cooking chamber **20** are discharged out.

The cooking chamber **20** may further include a plurality of heaters for generating heat, a convection fan for circulating air inside the chamber, and a rotating drum for rotating the object to be heated. Heaters, convection fans, and rotating drum are obvious to those skilled in the art, and detailed descriptions thereof will be omitted.

Refering to Fig. **2** to Fig. **3****,** a discharge device **30** is connected to the exhaust tube **22** installed on the side of the cooking chamber **20** for cooling and discharging out the fumes. The discharge device **30** is composed of a water reservoir **40,** a cooling container **50,** and a gasket **60.**

The water reservoir **40** has a tall rectangular shaped body in which a space to receive water is formed. A water supply plug **42** is installed on the upper side of the water reservoir **40** to fill or discard water. The water reservoir **40** is removably accommodated in the cooling container **50** to cool the fumes moving along its outer surface. The water reservoir **40** is formed of a metal, such as aluminum that conducts heat well.

The cooling container **50** has a tall rectangular shaped body with an upper opening and a space for storing water **80,** and the water reservoir **40** is accommodated therein through the upper opening. An inlet pipe **52** through which fumes flow is formed at one side of the cooling container **50** and connected to the exhaust tube **22.** The inlet pipe **52** is located at a position higher than the level of water **80** in the cooling container **50** and has an inner diameter in a range of 5 mm - 25 mm. The cooling container **50** is detachably connected to the exhaust tube **22** to make it easy to fill water or wash.

A first partition wall **54,** a second partition wall **55,** and a third partition wall **56** are installed in vertical direction at the bottom of the cooling container **50.** The water **80** in the cooling container **50** serves to cool the fumes passing through the discharge device **30** with help from the water reservoir **40.** The fumes are reduced in two different stages, firstly cooled by the water reservoir **40** while moving and adhering to the surface thereof, and secondly cooled by the water **80** in the cooling container **50.** The water reservoir **40** is detachably connected to the cooling container **50** and can be easily separated for cleaning. The water **80** in the cooling container **50** may freely flow between the first partition wall **54,** the second partition wall **55,** and the third partition wall **56,** or through an open space.

A pair of a first sidewall **54a,** a pair of second sidewall **55a,** and a pair of third sidewall **56a** are formed at the two long sides of the cooling container **50,** starting from the partion walls to seal the gap between the water reservoir **40** and the cooling container **50.**

A gasket **60** is formed starting at an edge of the opening on the third sidewall **56a,** turning around the wall where the inlet pipe **52** is formed, and extending to an edge of the other third sidewall **56a** on the opposite side.

The second partition wall **55** is in close contact with the bottom of water reservoir **40,** and a first gap **70** is formed between the first partition wall **54** and the bottom of water reservoir **40,** and a third gap **74** is formed between the third partition wall **56** and the bottom of water reservoir **40.** The height of the second sidewall **55a** is shorter than the other two side walls **54a** and **56a,** so that a second gap **72** is formed at the top thereof.

The gap between the lower portion of water reservoir **40** and the first partition wall **54** and the third partition wall **56** is formed in the range of 0.5 mm - 3 mm.

The fumes entering into the inlet pipe **52** are cooled: while moving downward between the water reservoir **40** and the cooling container **50,** passing through the first gap **70,** moving toward the second gap **72,** passing through the second gap **72,** moving toward the third gap **74,** and lastly passing through the third gap **74.** After the fumes in the discharge device **30** are reduced through a multitude of reduction stages, an uncooled gas is exhausted in opposite direction of the side where the inlet pipe **52** is installed.

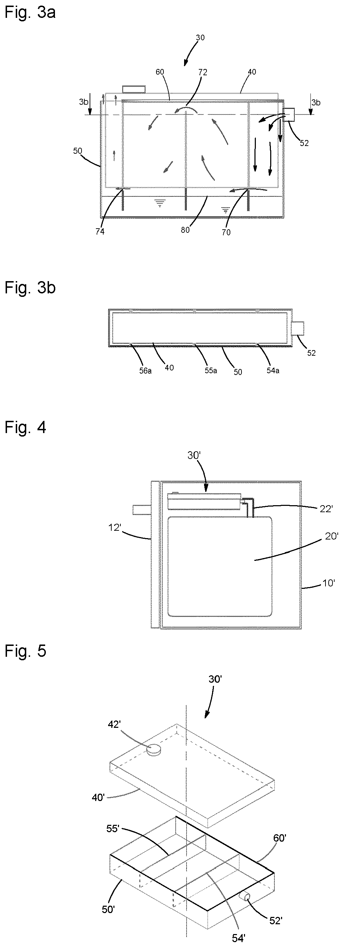

Fig. **4** and Fig. **5** show a discharge device 30' according to the second embodiment of the present invention.

A cooking chamber **20'** for accommodating an object is formed inside a body **10',** and a door **12'** is installed in front of the body **10'** to open and close the opening of the cooking chamber **20'.** An exhaust tube **22'** for discharging out fumes is installed above the cooking chamber **20'.** The exhaust tube **22'** is the only passage through which the fumes in the cooking chamber **20'** are discharged out.

The discharge device **30'** is connected to the exhaust tube **22'** for cooling and discharging out the fumes. The discharge device **30'** includes a water reservoir **40',** a cooling container **50',** and a gasket **60'.**

The water reservoir **40'** is a rectangular shaped container in which a space is formed to receive water. A water supply plug **42'** for receiving water is installed on the top side of the water reservoir **40'.** The water reservoir **40'** is detachably connected to the upper opening of the cooling container **50'** to cool the fumes moving along its surface. The bottom side of water reservoir **40'** is formed of a metal, such as aluminum that conducts heat well.

A cooling container **50'** has a rectangular body with an open upper side and a space to contain water at the bottom side. An inlet pipe **52'** is formed at one side of the cooling container **50'** and connected to the exhaust tube **22'** through which the fumes flow. The upper opening of the cooling container **50'** is covered by the water reservoir **40'.** The inlet pipe **52'** is installed at a position higher than the level of water **80'** in the cooling container **50',** and its inner diameter is in the range of 5 mm - 25 mm. The cooling container **50'** is detachably connected to the exhaust tube **22',** so that it is easy to fill water or clean.

A first partition wall **54'** and a second partition wall **55'** are installed in vertical direction at the bottom of the cooling container **50'.** The water **80'** in the cooling container **50'** serves to cool the fumes in the discharge device **30'** with help from the water reservoir **40'.**

The fumes are reduced in two different stages, firstly cooled by the water reservoir **40'** while moving through a number of gaps and adhering to the surface, and secondly cooled and precipitated on the water in the cooling container **50'.** The water reservoir **40'** is detachably connected to the cooling container **50'** and can be separated for cleaning.

A gasket **60'** is installed on the upper edge of the sides to which the first partition **54',** the second partition wall **55',** and the inlet pipe **52'** are installed. The gasket **60'** seals any gaps between the water reservoir **40'** and the cooling container **50'.**

A first gap **70'** is formed between the first partition wall **54'** and the bottom side of water reservoir **40',** and a second gap **72'** is formed between the second partition wall **55'** and the bottom side of water reservoir **40'.** The first gap **70'** and the second gap **72'** are passages through which the fumes move. The gap between the bottom side of water reservoir **40'** and the first and second partition walls **54'** and **55'** is in the range of 0.2 mm - 2 mm.

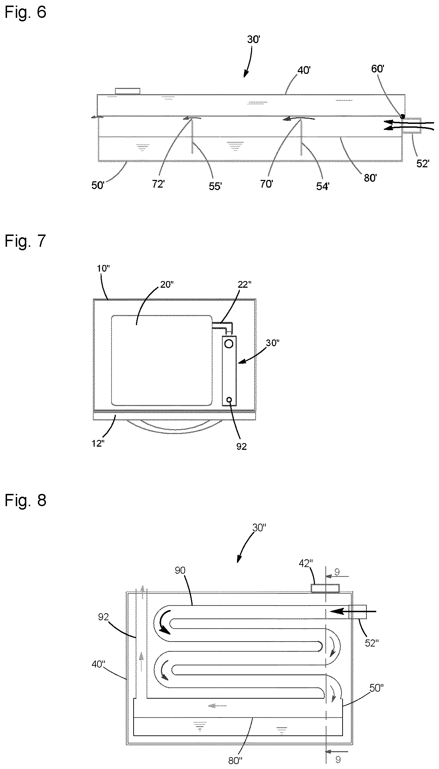

Referring to Fig. **6****,** the fumes entering the inlet pipe **52'** into the water reservoir **40'** and the water **80'** in the cooling container **50'** are cooled: while passing through the first gap **70',** moving toward the second gap **72',** and passing through the second gap **72'.** The fumes continue to be cooled after passing through the second gap **72'** until they exit the cooling container **50'.** The fumes are reduced through a number of reduction stages in the discharge device **30',** and an uncooled gas is exhausted in the opposite direction of the side where the inlet pipe **52'** is installed.

Fig. **7,** Fig. **8****,** and Fig. **9** show a discharge device **30"** according to the third embodiment of the present invention.

A cooking chamber **20"** for receiving an object is formed inside a body **10",** and a door **12"** for opening and closing the opening of the cooking chamber **20"** is installed in front of the body **10".** An exhaust tube **22"** for discharging out fumes is installed on the side of the cooking chamber **20".** The exhaust tube **22"** is the only passage through which the fumes in the cooking chamber **20"** are discharged out.

The discharge device **30"** is connected to the exhaust tube **22"** for cooling and discharging out the fumes. The discharge device **30"** is composed of a water reservoir **40",** a cooling container **50",** and an inlet pipe **52".**

The water reservoir **40"** has a tall rectangular shaped body in which a space is formed to receive water. A water supply plug **42"** is installed on the upper side of the water reservoir **40"** to fill or discard water. The water reservoir **40"** accommodates a cooling container **50"** therein to keep it at low temperature.

A cooling container **50"** has a rectangular shaped body, and a tube **90** is formed at the upper end of one side. An exhaust pipe **92** is formed in vertical direction at the upper end of the other side. The tube **90** consists of a plurality of straight portions installed in parallel in horizontal direction and U-shaped bending portions alternately arranged at both ends of the straight portion. The tube **90** is connected as one line and has an elliptical cross-section through which gas can circulate. The cooling container **50"** receives water **80"** therein and has a space through which gas can flow over the water **80".** The cooling container **50"** is inserted inside the water reservoir **40".** The tube **90** is maintained at low temperature by the water in the water reservoir **40",** and the fumes are reduced by sticking to the inner surface of the tube **90.**

An inlet pipe **52"** is connected to the upper straight end portion of the tube **90** and penetrates the upper side of the water reservoir **40".** The inlet pipe **52"** is connected to the exhaust tube **22"** to introduce the fumes into the tube **90.**

An exhaust pipe **92** having a circular cross section is provided in vertical direction at an upper end of the opposite side to which the tube **90** is fixed. The exhaust pipe **92** penetrates the upper portion of the water reservoir **40"** to discharge out gas exiting the cooling container **50".** The exhaust pipe **92** is kept at low temperature in the water reservoir **40",** and the fumes are reduced by sticking to its inner surface. The exhaust pipe **92** is also configured to fill or remove the water **80"** in the cooling container **50".**

The cooling container **50",** the tube **90,** and the exhaust pipe **92** are formed of a metal that conducts heat well and have a sealed structure so that water in the water reservoir **40"** does not leak.

The fumes entering into the inlet pipe **52"** are reduced in two different stages, firstly by sticking to the surface of the tube **90** and the exhaust pipe **92** which are kept cool in the water reservoir **40",** and secondly cooled and precipitated on the water in the cooling container **50".**

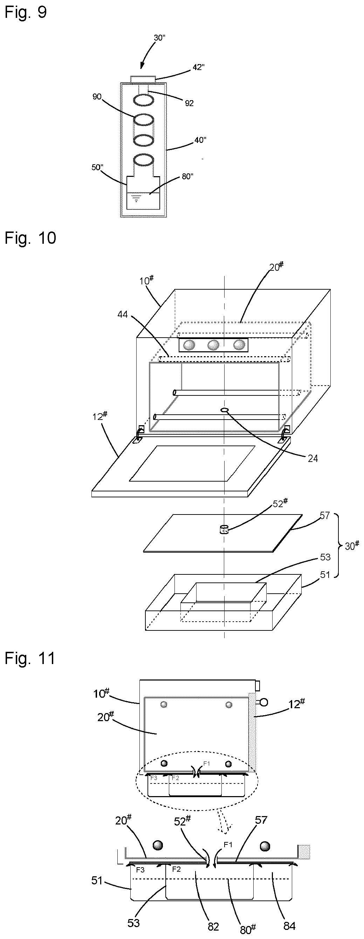

Fig. **10** and Fig. **11** show a discharge device **30**^{#} according to the fourth embodiment of the present invention.

A cooking chamber **20**^{#} for receiving an object is formed inside a body **10**^{#}, and a door **12**^{#} for opening and closing the opening of the cooking chamber **20**^{#} is installed in front of the body **10**^{#}. An exhaust hole **24** for discharging out fumes from the object is formed at the bottom center of the cooking chamber **20**^{#}. The cooking chamber **20**^{#} is sealed except for the exhaust hole **24** so that the exhaust hole **24** is the only passage where the fumes in the cooking chamber **20**^{#} are discharged out.

The exhaust hole **24** is connected to the inlet pipe **52**^{#} of the cover **57** and serve as a passage through which gas or liquid in the cooking chamber **20**^{#} moves.

The discharge device **30**^{#} comprises an outer container **51,** an inner container **53,** and a cover **57.** The discharge device **30**^{#} is located below the bottom of the cooking chamber **20**^{#} to cool the fumes exiting therefrom.

The outer container **51** is bowl-shaped, has an opening at its top portion and a bottom at the lower portion of its side wall to receive water. The inner container **53** has a shape resembling the outer container **51,** and its size is smaller than the outer container **51** to be positioned in the center thereof. The bottom of the inner container **53** is connected to the bottom of the outer container **51.**

The cover **57** is a flat plate and covers an upper opening of the outer container **51** and the inner container **53.** The cover **57** is provided with an inlet pipe **52**^{#} which protrudes upward from a hole formed in the center thereof. The inlet pipe **52**^{#} which allows fluids move up and down is connected detachably to the exhaust hole **24.** The inlet pipe **52**^{#} is a passage through which the fumes in the cooking chamber **20**^{#} flow into the inner container **53.** The cover **57** is detachably connected to the outer container **51** and the inner container **53,** so that it is convenient to fill water **80**^{#} and clean.

The upper rim of the inner container **53** and the outer container **51** are in contact with the surface of the cover **57.** A first space **82** is formed between the inner container **53** and the cover **57,** and a second space **84** surrounded by the outer container **51** is formed between the inner container **53** and the cover **57.**

The upper rim of the outer container **51** and the inner container **53** is brought into close contact with the cover **57** during heating of an object, and the cover **57** can be separated after heating. Some fine gaps are formed at a surface between the cover **57** and the outer container **51** and the inner container **53** so that the fumes are discharged out therethrough.

The fumes flowing into the first space **82** through the inlet pipe **52**^{#} are cooled, and uncooled fumes move to the second space **84** through a gap between the upper rim of the inner container 53 and the cover **57.**

The fumes flowing into the second space **84** from the first space **82** are cooled, and uncooled fumes are discharged outside through a gap between the upper rim of the outer container **51** and the cover **57.**

The fumes are reduced efficiently in two-stage cooling structure, firstly cooled while passing through the first space **82,** and secondly cooled while passing through the second space **84.**

Referring to Fig. **11****,** the operation and effect of the discharge device **30**^{#} will be described.

The fumes in the cooking chamber **20**^{#} cannot escape to other places, but only flow into the first space **82** through the inlet pipe **52**^{#} which is connected to the exhaust hole **24 (F1).** The fumes in the first space **82** are cooled by the water **80**^{#} in the inner container **53.** The fumes not cooled in the first space **82** move to the second space **84** through the gap between the upper rim of the inner container **53** and the cover **57 (F2).** The fumes flowing into the second space **84** are cooled by the water **80**^{#}. The fumes not cooled in the second space **84** are discharged out through the gap between the upper rim of the outer container **51** and the cover **57 (F3).**

According to the present invention, discharge devices **30, 30', 30", 30**^{#} which are designed to cool fumes while moving over the water over in the containers **50, 50', 50", 51, 53** with no direct contact with water or passing through water do not require any separate air movement device such as a fan.

The lower the temperature of the water, the more effectively the fumes cool down. Therefore, it is preferable that the cooking chambers **20, 20', 20", 20**^{#} and the discharging devices **30, 30', 30", 30**^{#} are installed separately from each other or an insulating material is provided in order to prevent direct transfer of heat. Alternatively, an outside air can be blown to the discharge devices **30, 30', 30", 30**^{#} with a fan to block conduction of heat from the cooking chambers **20, 20', 20", 20**^{#}.

The discharge devices **30, 30', 30", 30**^{#} of the present invention can be connected to various appliances such as grills, ovens, air fryers, food waste dryers, and coffee roasters to solve the problem that fumes spreads indoors..

The scope of the present invention is not limited to the above-described embodiments, and various changes and modifications may be made by those of ordinary skill in the art to which the invention belongs. Accordingly, the present invention is limited only by the following claims.

**LIST OF NUMERALS**

| | |
|---|---|
| **10, 10', 10", 10**^{#}: body | **12, 12', 12", 12**^{#}: door |
| **20, 20', 20", 20**^{#}: cooking chamber | **22, 22', 22":** exhaust tube |
| **24:** exhaust hole | **30, 30', 30", 30**^{#}: discharge device |
| **40, 40', 40":** water reservoir | **42, 42', 42":** water supply plug |
| **50, 50', 50":** cooling container | **51:** outer container |
| **52, 52', 52", 52**^{#}: inlet pipe | **53:** inner container |
| **54, 54':** first partition wall | **54a:** first sidewall |
| **55, 55':** second partition wall | **55a:** second sidewall |
| **56:** third partition wall | **56a:** third sidewall |
| **57:** cover | **60, 60':** gasket |
| **70, 70':** first gap | **72, 72':** second gap |
| **74:** third gap | **80, 80', 80", 80**^{#}: water |
| **82:** first space | **84:** second space |
| **90:** tube | **92:** exhaust pipe |

## Claims

1. A discharge device **30** connected to an exhaust tube **22** for discharging out
fumes of the cooking chamber **20** comprising:
a water reservoir **40** having a water supply plug **42** on an upper side of a tall rectangular shaped body in which a space is formed to receive water;
a cooling container **50** having a tall rectangular shaped body with an open upper part through which accommodates the water reservoir **40** and a space to receive water **80** in the lower part; an inlet pipe **52** formed at one side of the rectangular body is connected to the exhaust tube **22** through which the fumes flow; a first partition wall **54,** a second partition wall **55,** and a third partition wall **56** are installed in vertical direction at the bottom part of the cooling container **50;** a pair of a first sidewall **54a,** a pair of second sidewall **55a,** and a pair of third sidewall **56a** are formed at the two sides of the cooling container **50** above the partion walls to seal the gap between the water reservoir **40** and the cooling container **50;** and
a gasket **60** which is formed starting at an edge of the opening on the third sidewall **56a,** turning around the wall where the inlet pipe **52** is formed, and extending to an edge of the other third sidewall **56a** on the opposite side,
wherein a first gap **70** is formed between the first partition wall **54** and the bottom side of the water reservoir **40,** and a third gap **74** is formed between the third partition wall **56** and the bottom side of the water reservoir **40;** the height of the second sidewall **55a** is shorter than the other two side walls **54a** and **56a,** so that a second gap **72** is formed at the top thereof; the fumes entering into the inlet pipe **52** are reduced in two different stages, firstly cooled by the water reservoir **40** while moving through a number of gaps and adhering to the surface, and secondly cooled and precipitated by the water **80** in the cooling container **50.**

2. The discharge device **30** according to claim **1,** wherein the cooling container **50** is detachably connected to the exhaust tube **22.**

3. The discharge device **30** according to claim **1,** wherein the water reservoir **40** is detachably accommodated in the cooling container **50.**

4. The discharge device **30** according to claim **1,** wherein the inlet pipe **52** is located at a position higher than the water level in the cooling container **50.**

5. A discharge device **30'** connected to an exhaust tube **22'** for discharging out fumes of the cooking chamber **20'** comprising:
a water reservoir **40'** having a water supply plug **42'** on an upper side of a rectangular shaped body in which a space is formed to receive water;
a cooling container **50'** having a rectangular body with an open upper side through which accommodates the water reservoir **40'** and a space to receive water **80'** in the lower part; an inlet pipe **52'** formed at one side of the rectangular body is connected to the exhaust tube **22'** through which the fumes flow; a first partition wall **54'** and a second partition wall **55'** are installed in vertical direction at the bottom of the cooling container **50';** the upper opening of the cooling container **50'** is covered by the water reservoir **40';** and
a gasket **60'** which is installed on the upper edge of the sides to which the first partition **54',** the second partition wall **55',** and the inlet pipe **52'** are formed,
wherein a first gap **70'** is formed between the first partition wall **54'** and the bottom side of water reservoir **40',** and a second gap **72'** is formed between the second partition wall **55'** and the the bottom side of water reservoir **40';** the first gap **70'** and the second gap **72'** are passages through which the fumes move; the fumes entering into the inlet pipe **52'** are reduced in two different stages, firstly cooled by the water reservoir **40'** while moving through a number of gaps and adhering to the surface, and secondly cooled and precipitated by the water **80'** in the cooling container **50'.**

6. The discharge device **30'** according to claim **6,** wherein the cooling container **50'** is detachably connected to the exhaust tube **22'.**

7. The discharge device **30'** according to claim **6,** wherein the water reservoir **40'** is detachably accommodated in the cooling container **50'.**

8. The discharge device **30'** according to claim **6,** wherein the inlet pipe **52'** is located at a position higher than the water level in the cooling container **50'.**

9. A discharge device **30"** connected to an exhaust tube **22"** for discharging out fumes of the cooking chamber **20"** comprising:
a water reservoir **40"** having a water supply plug **42"** on an upper side of a tall rectangular shaped body in which a space is formed to receive water;
a cooling container **50"** having a rectangular shaped body which is inserted inside the water reservoir **40";** a tube **90** is formed at the upper end of one side and an exhaust pipe **92** is formed in vertical direction at the upper end of the other side of the cooling container **50"** in which a space is formed to receive water **80";** the tube **90** cosists of a plurality of straight portions installed in parallel in horizontal direction and U-shaped bending portions alternately arranged at both ends of the straight portion; the tube **90** is connected as one line and has an elliptical cross-section through which gas can circulate; and
an inlet pipe **52"** which is connected to the upper straight end portion of the tube **90** and penetrates the upper side of the water reservoir **40";** the inlet pipe **52"** is connected to the exhaust tube **22"** to introduce the fumes into the tube **90,**
wherein the exhaust pipe **92** penetrates the upper portion of the water reservoir **40"** to discharge out gas exiting the cooling container **50";** the fumes entering into the inlet pipe **52"** are reduced in two different stages, firstly by adhering to the surface of the tube **90** and the exhaust pipe **92** which are kept cool in the water reservoir **40",** and secondly cooled and precipitated on the water in the cooling container **50".**

10. The discharge device **30"** according to claim **11,** wherein the inlet pipe **52"** is detachably connected to the exhaust tube **22".**

11. The discharge device **30"** according to claim **11,** wherein the exhaust pipe **92** is configured to fill or remove the water **80"** in the cooling container **50".**

12. The discharge device **30"** according to claim **11,** wherein the cooling container **50",** the tube **90,** and the exhaust pipe **92** have a structure that is sealed so that water in the water reservoir **40"** does not leak.

13. A discharge device **30**^{#} connected to a cooking chamber **20**^{#} where an exhaust hole **24** for discharging out fumes is formed at the bottom center thereof; the cooking chamber **20**^{#} is sealed except for the exhaust hole **24** so that the exhaust hole **24** is the only passage through which the fumes in the cooking chamber **20**^{#} are discharged out; the above-described discharge device **30**^{#} comprising:
a bowl-shaped outer container **51** which has an opening at its top portion and a bottom at the lower portion of its side wall to receive water;
an inner container **53** which has a shape resembling the outer container **51;** the size of the inner container **53** is smaller than the outer container **51** to be positioned in the center thereof; and
a cover **57** having a flat plate shape for covering an upper opening of the outer container **51** and the inner container **53;** the cover **57** is provided with an inlet pipe **52**^{#} which protrudes upward from a hole formed at the center thereof,
wherein the exhaust hole **24** and inlet pipe **52**^{#} are connected to each other so that the fumes in the cooking chamber **20**^{#} flow into the inner container **53;** a first space **82** is formed between the inner container **53** and the cover **57,** and a second space **84** surrounded by the outer container **51** is formed between the inner container **53** and the cover **57;** the fumes are reduced in two-stage cooling structure, firstly cooled while passing through the first space **82,** and secondly cooled while passing through the second space **84.**

14. The discharge device **30**^{#} according to claim **15,** wherein the inlet pipe **52**^{#} is detachably connected to the exhaust hole **24.**

15. The discharge device **30**^{#} according to claim **15,** wherein the outer container **51** and the inner container **53** are detachably connected to the cover **57.**

16. The discharge device **30**^{#} according to claim **15,** wherein the fumes flowing into the first space **82** through the inlet pipe **52**^{#} are cooled, and any uncooled fumes move to the second space **84** through the gap between the upper rim of the inner container **53** and the cover **57.**
